Europäisches Patentamt

(19) European Patent Office

Office européen des brevets

(11) Numéro de publication: **0 296 895**
**B1**

(12) **FASCICULE DE BREVET EUROPEEN**

(45) Date de publication du fascicule du brevet:
02.05.90

(51) Int. Cl.⁴: **F15D 1/00**, F02M 29/06,
F02B 31/00

(21) Numéro de dépôt: **88401090.1**

(22) Date de dépôt: **04.05.88**

(54) **Dispositif de mise en rotation d'un gaz s'écoulant dans une portion rectiligne d'un conduit.**

(30) Priorité: **25.05.87 FR 8707335**

(43) Date de publication de la demande:
**28.12.88 Bulletin 88/52**

(45) Mention de la délivrance du brevet:
**02.05.90 Bulletin 90/18**

(84) Etats contractants désignés:
**DE GB IT**

(56) Documents cités:
**EP-A- 0 181 076**
**FR-A- 1 136 928**
**US-A- 1 998 886**
**US-A- 4 232 645**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Laine,Gabriel, 2 allée de Savoie, F-78570 Andrésy(FR)**

(74) Mandataire: **Kohn, Philippe et al, c/o CABINET LAVOIX 2, place d'Estienne d'Orves, F-75441 Paris Cédex 09(FR)**

ACTORUM AG

## Description

La présente invention a pour objet un dispositif de mise en rotation d'un gaz s'écoulant dans une portion rectiligne d'un conduit, du type comportant un déflecteur déformable en une volute hélicoïdale à pas variable au moyen d'un axe de commande rotatif coaxial à la portion de conduit.

Des dispositifs de mise en rotation d'un gaz sont utilisés dans la construction automobile, par exemple pour provoquer une rotation de l'air admis dans le compresseur d'un turbo-compresseur d'un moteur à combustion interne afin d'augmenter la vitesse de mise en action du compresseur. Un dispositif du type susmentionné peut également être agencé en amont d'un conduit d'admission d'une culasse de moteur à combustion interne.

On connait plusieurs dispositifs mécaniques de mise en rotation d'un gaz qui comprennent généralement une ou plusieurs pales installées à l'intérieur d'un conduit. Afin d'obtenir un effet de rotation plus ou moins important du gaz, l'inclinaison des pales doit être variable. A cet effet, les systèmes mécaniques comportent des pales de formes complexes montées sur des axes ou des paliers pour permettre leur rotation, ainsi qu'éventuellement des moyens de synchronisation des pales comportant, par exemple, des cames ou des engrenages. Le document FR-A-1.136.928 décrit un exemple de dispositif mécanique du type susmentionné dans lequel la volute présente un enroulement de sens constant, avec un pas relativement court ne variant que faiblement par déplacement axial de l'axe de commande.

L'invention a pour but de proposer un dispositif de mise en rotation d'un gaz qui soit de structure simple et peu coûteuse et qui permette de faire varier notablement le pas de la volute hélicoïdale ainsi qu'éventuellement le sens d'enroulement de celle-ci.

Dans ce but, l'invention propose un dispositif caractérisé en ce que le déflecteur est constitué d'une membrane élastique s'étendant, au repos, dans au moins un plan radial de la portion de conduit, munie à l'une de ses extrémités d'un premier renfort radial rigide immobilisé en rotation par rapport au conduit, et à son autre extrémité d'un second renfort radial rigide lié en rotation à l'axe de commande.

Grâce à cette conception du déflecteur, une simple action sur un levier solidaire de l'axe de commande provoque la déformation de la membrane souple qui se met en hélice avec un pas plus ou moins grand selon l'angle de rotation appliqué à l'axe de commande. Le sens de rotation du gaz peut être inversé simplement en inversant le sens de rotation de l'axe de commande qui provoque ainsi une mise en hélice de la membrane selon un pas inversé.

Selon une autre caractéristique de l'invention, le dispositif comporte des moyens de tension axiale de la membrane, constitués par exemple par un ressort agissant sur l'axe de commande, grâce auquel la membrane est maintenue tendue, notamment dans sa position de repos dans laquelle elle s'étend dans un plan radial.

Selon un mode de réalisation préféré de l'invention, la membrane élastique est constituée de deux demi-membranes disposées de part et d'autre de l'axe de commande dont une extrémité est montée tournante dans un palier formé dans le premier renfort radial rigide.

D'autres caractéristiques et avantages de l'invention apparaîtront à la lecture de la description détaillée qui va suivre pour la compréhension de laquelle on se reportera au dessin annexé dans lequel:

- la figure 1 est une vue en coupe axiale d'un dispositif de mise en rotation conforme aux enseignements de l'invention ;
- la figure 2 est une vue en coupe selon la ligne 2-2 de la figure 1 ;
- la figure 3 est une vue en coupe selon la ligne 3-3 de la figure 1 ; et
- la figure 4 est une vue similaire à celle de la figure 3 d'une variante de réalisation.

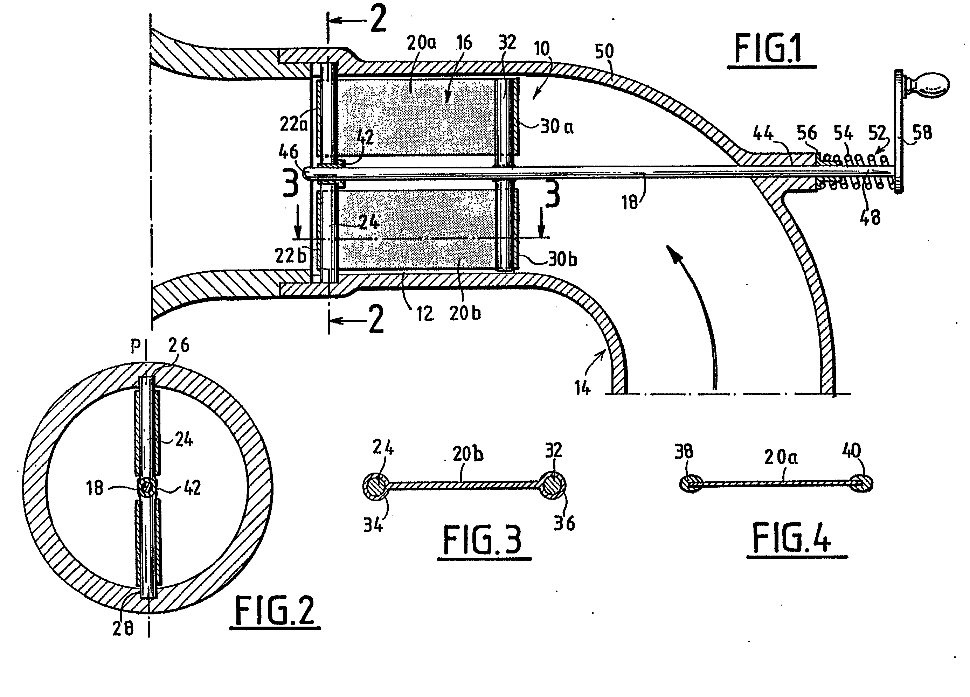

Le dispositif de mise en rotation 10 représenté à la figure 1 est agencé dans une portion rectiligne 12 d'un conduit d'alimentation en air 14 d'un turbo-compresseur (non représenté) d'un moteur à combustion interne.

Le dispositif 10 comporte un déflecteur 16 qui est susceptible de se déformer en une volute hélicoïdale à pas variable sous l'action d'un axe de commande rotatif 18.

Selon l'invention, le déflecteur déformable 16 est constitué d'une membrane élastique qui, au repos, c'est-à-dire dans la position représentée aux figures, s'étend dans un plan radial P de la portion rectiligne de conduit 12.

La membrane élastique est constituée de deux demi-membranes 20a et 20b disposées de part et d'autre de l'axe de commande 18. Chacune des extrémités de gauche 22a et 22b, en considérant la figure 1, des deux demi-membranes 20a et 20b est munie d'un premier renfort radial rigide 24. Le renfort radial commun 24 est immobilisé en rotation par rapport à la portion de conduit 12 au moyen de deux encoches axiales 26 et 28 dans lesquelles sont insérées les extrémités radiales du renfort 24.

Les extrémités de droite 30a et 30b de chacune des deux demi-membranes 20a et 20b sont munies d'un second renfort radial rigide 32. Le renfort radial commun 32 est lié en rotation à l'axe de commande 18 sous l'action duquel il peut tourner à l'intérieur du conduit 12.

Selon le mode de réalisation représenté aux figures 1 à 3, les renforts rigides 24 et 32 sont enfilés dans des portions correspondantes en forme de boucles 34 et 36 prévues aux extrémités des demi-membranes 20a et 20b.

Selon la variante de réalisation représentée à la figure 4, les extrémités des demi-membranes 20a et 20b peuvent être insérées dans des portions correspondantes en forme de pinces 38 et 40 des renforts rigides 24 et 32 respectivement.

Les demi-membranes 20a et 20b peuvent, par exemple, être réalisées en un matériau souple tel que du caoutchouc éventuellement renforcé par une toile.

L'axe de commande 18 est monté à rotation dans deux paliers 42 et 44 dans lesquels il peut également coulisser axialement.

Le premier palier 42 et formé dans le premier renfort rigide 24 et est constitué par un trou axial de ce dernier.Une première extrémité libre 46 de l'axe de commande 18 est ainsi guidée en translation et en rotation à l'intérieur du conduit 12.

La seconde extrémité libre 48 de l'axe de commande 18 est montée tournante et coulissante dans le second palier 44 qui est agencé dans la paroi 50 d'une portion courbe de conduit qui prolonge la portion rectiligne 12 vers la droite, en considérant la figure 1. Le palier 44 est constitué d'un trou formé dans la paroi 50.

Afin d'assurer une tension axiale des demi-membranes 20a et 20b, le dispositif de mise en rotation comporte des moyens de tension axiale 52 constitués par un ressort de compression 54. Le ressort 54 est disposé entre un épaulement 56 du conduit et une face latérale du levier de commande 58 de l'axe de commande 18. Le ressort de compression 54 agit sur l'axe de commande 18 qu'il sollicite en permanence vers la droite, en considérant la figure 1.

Lorsqu'on applique un effort de commande à l'axe de commande 18, dans l'un ou l'autre sens de rotation, au moyen du levier de commande 58, les deux demi-membranes 20a et 20b se déforment simultanément pour prendre la forme d'une volute hélicoïdale qui provoquera la mise en rotation du gaz s'écoulant dans la portion rectiligne de conduit 12. Lors de leur déformation, la longueur axiale des demi-membranes 20a et 20b se réduit progressivement ; cette réduction est rendue possible grâce au montage coulissant des extrémités libres 46 et 48 de l'axe de commande 18 dans les paliers 42 et 44, et grâce et au ressort de compression 54 qui se comprime légèrement pour permettre le déplacement vers la gauche de l'axe de commande 18 qui y est entraîné par le second renfort radial commun 32 lié à l'axe de commande 18.

Selon une variante, non représentée, la membrane peut êgre constituée d'au moins trois portions radiales réparties régulièrement autour de l'axe 18, chaque portion étant analogue à l'une des demi-membranes 20a, 20b susmentionnées.

## Revendications

1. Dispositif de mise en rotation d'un gaz s'écoulant dans une portion rectiligne (12) d'un conduit, du type comportant un déflecteur (16) déformable en une volute hélicoïdale à pas variable au moyen d'un axe de commande rotatif (18) coaxial à la portion de conduit, caractérisé en ce que le déflecteur est constitué d'une membrane élastique (20a, 20b), s'étendant, au repos, dans au moins un plan radial (P) de la portion de conduit, munie à l'une de ses extrémités (22a, 22b) d'un premier renfort radial rigide (24) immobilisé en rotation par rapport au conduit, et à son autre extrémité (30a, 30b) d'un second renfort radial rigide (32) lié en rotation à l'axe de commande (18).

2. Dispositif selon la revendication 1, caractérisé en ce qu'il comporte des moyens de tension axiale (52) de la membrane (20a, 20b).

3. Dispositif selon la revendication 2, caractérisé en ce que les moyens de tension axiale (52) sont constitués par un ressort (54) agissant sur l'axe de commande (18).

4. Dispositif selon l'une quelconque des revendications 1 à 3, caractérisé en ce que la membrane élastique est constituée de deux demi-membranes (20a, 20b) disposées de part et d'autre de l'axe de commande (18) dont une extrémité (46) est montée tournante dans un palier (42) formé dans le premier renfort radial rigide (24).

5. Dispositif selon l'une quelconque des revendications 1 à 4, caractérisé en ce que l'une des extrémités (48) de l'axe de commande (18) est montée tournante dans un palier (44) agencé dans la paroi (50) d'une portion courbe du conduit.

6. Dispositif selon l'une quelconque des revendications, caractérisé en ce qu'il est agencé dans le conduit d'alimentation d'un turbo-compresseur.

7. Dispositif selon l'une quelconque des revendications 1 à 5, caractérisé en ce qu'il est agencé en amont d'un conduit d'admission d'une culasse de moteur à combustion interne.

## Claims

1. A device for rotating a gas flowing out into a rectilinear portion (12) of a conduit, of the type comprising a deflector (16) which can be shaped into a variable pitch helical spiral by means of a rotating control shaft (18) coaxial with the portion of conduit, characterised in that the deflector is constituted by an elastic diaphragm (20a, 20b) extending, at rest, into at least one radial plane (P) of the portion of conduit and equipped at one of its ends (22a, 22b) with a first rigid radial reinforcement (24) which is rotationally engaged relative to the conduit and at its other end (30a, 30b) with a second rigid radial reinforcement (32) rotatably connected to the control shaft (18).

2. A device according to claim 1, characterised in that it comprises means (52) for the axial tensioning of the diaphragm (20a, 20b).

3. A device according to claim 2, characterised in that the axial tensioning means (52) are constituted by a spring (54) acting upon the control shaft (18).

4. A device according to any one of claims 1 to 3, characterised in that the elastic diaphragm is constituted by two half diaphragms (20a, 20b) arranged on either side of the control shaft (18), one end (46) of which is mounted so as to revolve in a bearing (42) formed in the first rigid radial reinforcement (24).

5. A device according to any one of claims 1 to 4, characterised in that one of the ends (48) of the control shaft (18) is mounted so as to revolve in a bearing (44) arranged in the wall (50) of a curved portion of the conduit.

6. A device according to any one of the claims, characterised in that it is arranged in the supply conduit of a turbo compressor.

7. A device according to any one of claims 1 to 5, characterised in that it is arranged upstream of an inlet conduit of an internal combustion engine cylinder head.

**Patentansprüche**

1. Vorrichtung zum Erzeugen einer Rotationsbewegung eines Gases, das in einem geradlinigen Abschnitt (12) einer Leitung fließt, vom Typ mit einem in eine schraubenförmige Spirale mit veränderbaren Steigung mittels einer drehenden Betätigungsachse (18) koaxial zum Leitungsabschnitt deformierbaren Ablenker (16), dadurch gekennzeichnet, daß der Ablenker oder Deflektor gebildet ist aus einer elastischen Membran (20a, 20b), die sich in Ruhestellung in wenigstens einer radialen Ebene (P) des Leitungsabschnitts erstreckt, die an einem ihrer Enden (22a, 22b) mit einer ersten starren Radialverstärkung (24) versehen ist, die drehunbeweglich bezüglich der Leitung gehalten wird, und an ihrem anderen Ende (30a, 30b) mit einer zweiten starren Radialverstärkung (32) versehen ist, die drehverbunden mit der Betätigungsachse (18) ist.

2. Vorrichtung nach Anspruch 1, dadurch gekennzeichnet, daß sie axiale Spanneinrichtungen (52) der Membran (20a, 20b) aufweist.

3. Vorrichtung nach Anspruch 2, dadurch gekennzeichnet, daß die Einrichtungen der axialen Spannung (52) durch eine Feder (54) gebildet sind, die auf die Betätigungsachse (18) wirkt.

4. Vorrichtung nach einem der Ansprüche 1 bis 3, dadurch gekennzeichnet, daß die elastische Membran aus zwei Halbmembranen (20a, 20b) gebildet ist, die beiderseits der Betätigungsachse (18) angeordnet sind, von der ein Ende (46) drehend in einem Lager (42) angeordnet ist, das in der ersten starren Radialverstärkung (24) ausgebildet ist.

5. Vorrichtung nach einem der Ansprüche 1 bis 4, dadurch gekennzeichnet, daß eines der Enden (48) der Betätigungsachse (18) drehbeweglich in einem Lager (44) angeordnet ist, das in der Seitenwand (50) eines Kurvenbereichs der Leitung ausgebildet ist.

6. Vorrichtung nach einem der Ansprüche, dadurch gekennzeichnet, daß sie in der Zuführleitung eines Turbokompressors angeordnet ist.

7. Vorrichtung nach einem der Ansprüche 1 bis 5, dadurch gekennzeichnet, daß sie stromauf einer Zuführleitung eines Zylinderkopfes einer Brennkraftmaschine angeordnet ist.

FIG1

FIG.2

FIG.3

FIG.4